# EUROPEAN PATENT SPECIFICATION

(11) **EP 1 908 704 B1**
(45) Date of publication and mention of the grant of the patent: **07.07.2010**
(21) Application number: 07117760.4
(22) Date of filing: 02.10.2007
(51) Int. Cl.: B65D 83/14, B29C 45/26

(54) **Outflow nozzle**
Ausflussdüse
Buse pour tube d'écoulement

(30) Priority: 02.10.2006 NL 2000254
(43) Date of publication of application: 09.04.2008
(73) Proprietor: Plasticum Group B.V., 5048 AN Tilburg (NL)
(72) Inventor: Lagerwerf, Markus Leendert, 5671 DK, Nuenen (NL); Hage, Frederik, 5121 JX, Rijen (NL)
(74) Representative: van Westenbrugge, Andries

(56) References cited:
- EP-A- 0 798 233
- EP-A- 1 029 807
- GB-A- 828 160
- US-A- 2 962 228
- US-A- 3 578 221
- US-A- 3 710 990
- US-A- 3 838 822

## Description

The present invention relates to an outflow nozzle according to the preamble of claim 1.

An outflow nozzle of this type is known from US-2962228 and this accords with the preamble of claim 1. In order to dispense fluids from spray cans, it is important that a turbulence is imparted on the fluid in order to release the gas bubbles which are present therein. In this connection, the aim is to provide a design which is such that the atomization at the dispensing nozzle is as even as possible.

It is known from the prior art to design the ducts which are to impart turbulence to a fluid as branched ducts. Other complicated designs are also known. However, in particular for vertical outflow nozzles, that is to say for outflow nozzles which atomize in the vertical direction when the spray can is in the use position, there is no outflow nozzle which meets the high demands with respect to atomization and can be produced inexpensively. US-2962228 discloses an outflow nozzle having spiral grooves in the outer circumference of the outflow channel.

It is an object of the present invention to provide an improved outflow nozzle which is effective, cheaply and easy to produce. This object is achieved with the above-described outflow nozzle having the features of claim 1.

According to the present invention, a helical groove is provided in the wall of the duct which extends between the dispensing sleeve of the spray can and the dispensing nozzle. Preferably, two or more grooves of this type are provided in an evenly distributed manner along the periphery of the duct. These grooves extend in the longitudinal direction of the duct, that is to say that the longitudinal centre axis of the grooves is substantially parallel with the longitudinal centre axis of the duct. However, the ducts are shaped in the form of a helix with respect to said longitudinal centre axis in order to impart turbulence to the fluid. If multiple grooves are used, the turbulence caused by each of the grooves is preferably the same. As a result thereof, the fluid is made to rotate which results in a turbulence which is such that gas bubbles can be produced in a simple and controlled manner.

The degree of curvature of the groove is preferably the same over its entire length. This makes it possible to determine a pitch. Preferably the length of the groove is at least a quarter of the pitch, that is to say that between the start and the end, the groove turns with respect to the longitudinal axis of the duct by at least 90°.

According to the present invention, the duct tapers between the receiving end on the spray can and the dispensing opening. Preferably, the duct tapers in an continuous manner. The shape of the groove preferably changes between the receiving end and the dispensing opening. Preferably, the width of the duct decreases in the direction of the dispensing opening. According to a further advantageous embodiment, the depth of the groove increases in the direction of the dispensing opening. More particularly, in this further embodiment, the entire cross-sectional area of the groove is preferably substantially constant along its entire length.

It has been found that with suitable dimensioning of the helical shape of the groove, the depth thereof and the shape of the duct, it is possible to produce the nozzle according to the invention with an injection-moulding process using a core which only has to carry out a reciprocating movement. That is to say that the core can be moved out of the mould cavity without rotation, along a line which coincides with the longitudinal centre axis of the duct.

According to a further advantageous embodiment of the invention, the dispensing nozzle forms an integral part of the dispensing opening, that is to say that it consists of one plastic component. No further plastic component is required so that, when the outflow nozzle is placed on the spray can, the latter is ready to use (except for a protective cover, if desired). In addition, the outflow nozzle may form an integral part of a protective cover or cap of the spray can.

The invention also relates to a method for producing the above-described outflow nozzle by means of injection-moulding, in which the core moves in and out of the mould cavity along the longitudinal centre axis, as described above, wherein the article produced can be removed without deformation thereof.

The invention will be explained in more detail below with reference to an exemplary embodiment illustrated in the drawing, in which:
Fig. 1 diagrammatically shows a spray can provided with an outflow nozzle according to the invention;
Fig. 2 shows the outflow nozzle from Fig. 1 in partially exploded view;
Fig. 3 shows the outflow nozzle from the previous figures together with the diagrammatically indicated grooves;
Fig. 4 diagrammatically shows part of an injection-moulding machine during the production of the outflow nozzle according to the present invention, and
Fig. 5 shows how the outflow nozzle is accommodated in a protective cover.

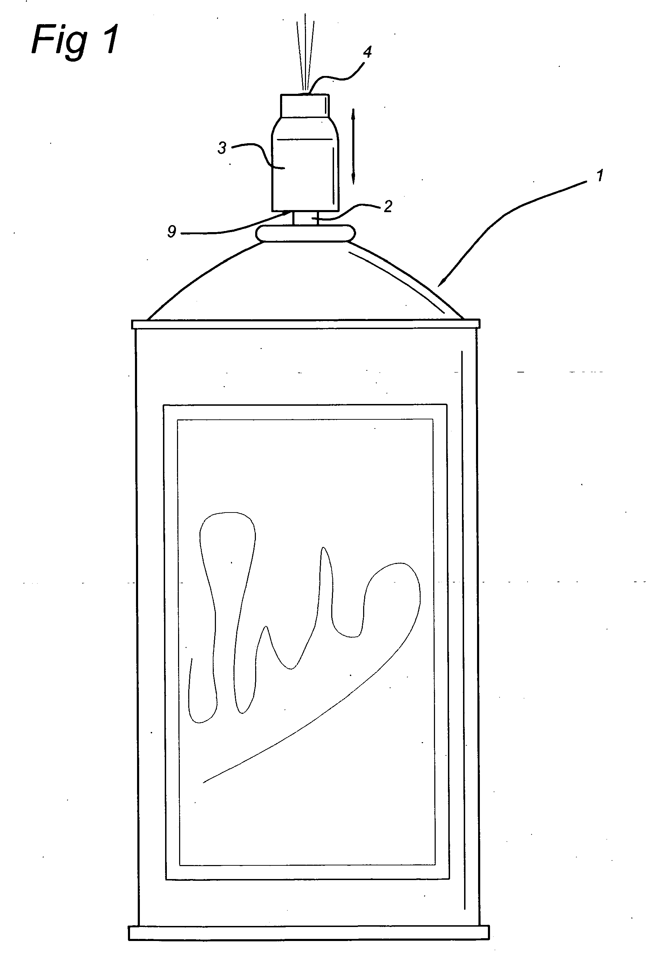

In Fig. 1, a spray can is denoted by reference numeral 1. It should be understood that the embodiment of the spray can is immaterial in the context of the invention.

This spray can is provided with a dispensing sleeve 2 which dispenses a fluid from the spray can 1 when a valve construction (not shown) is pressed.

The outflow nozzle 3 of the present invention, which is provided with a dispensing opening 4, is placed on said dispensing sleeve.

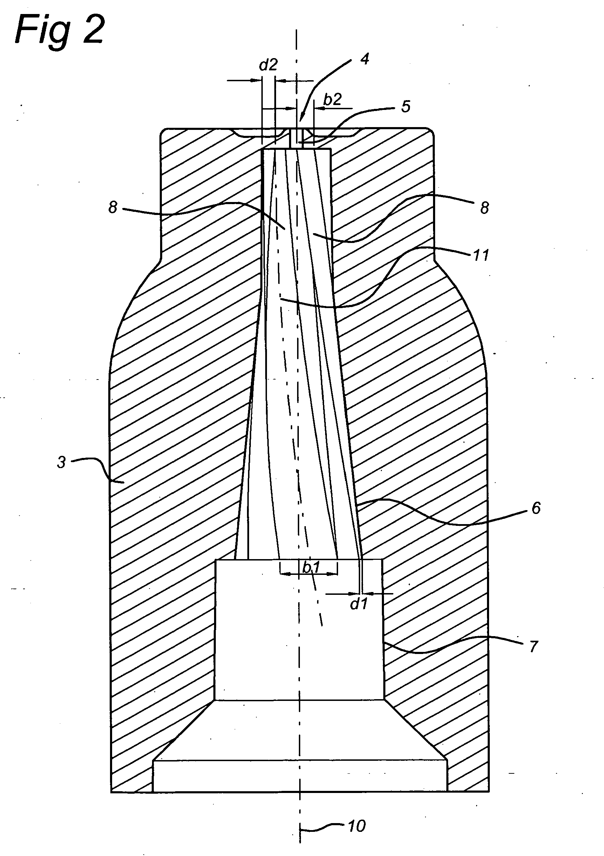

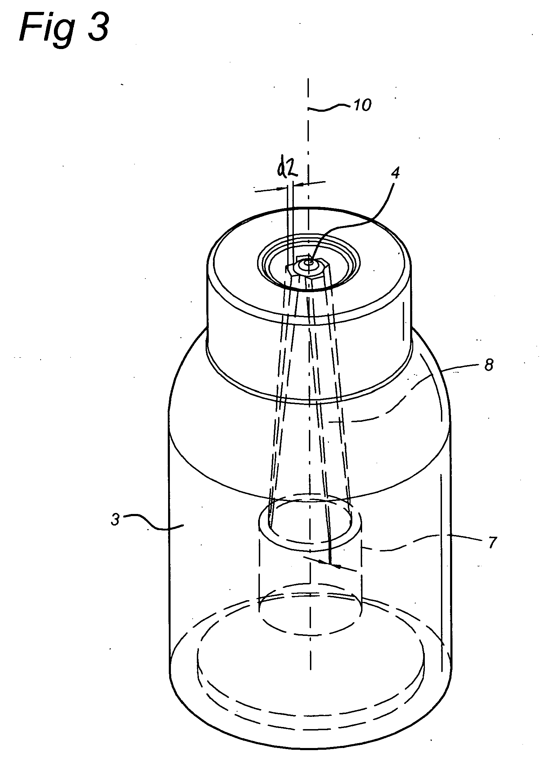

Details of the outflow nozzle 3 are illustrated in Figs 2 and 3.

These show that the outflow nozzle 3 has a cylindrical part 7 with an opening 9 for receiving the dispensing sleeve 2, preferably in a clamping manner, which is adjoined by a duct 6. The adjoining dispensing opening 4 is designed as an outflow nozzle and to this end is provided with a dispensing passage 5.

The present invention relates in particular to the design of the duct 6, which is provided with grooves 8 each having a centre axis 11. The centre axis of the duct 6 is denoted by reference numeral 10. Figs. 2 and 3 show that the grooves extend around this centre axis 10 in the shape of a helix at a relatively large pitch. As Figs. 2 and 3 show, the width of the grooves decreases in the direction of the dispensing opening 4. This width is denoted by reference numeral b 1 on the side of the cylindrical part 7 and by reference numeral b2 on the side of the dispensing opening 4.

The situation with regard to the depth of the grooves 8 is exactly the opposite. The depth at the cylindrical part 7 is denoted by reference numeral d1 and is relatively small, while the depth at the dispensing opening 4 is denoted by reference numeral d2 and is relatively large. Preferably, the cross-sectional area which is determined by w x d along the length of the groove decreases substantially evenly. As a result thereof, the fluid will be compressed in the direction of the dispensing nozzle. Vapour bubbles resulting from expansion immediately after introduction into the duct 6 are compressed again. In combination with the turbulence, this compression leads to a finer distribution of the vapour bubbles in the fluid and results in a finer atomization at the dispensing nozzle. In addition, as a result of this shape, the detachable design of the core part can be simplified further.

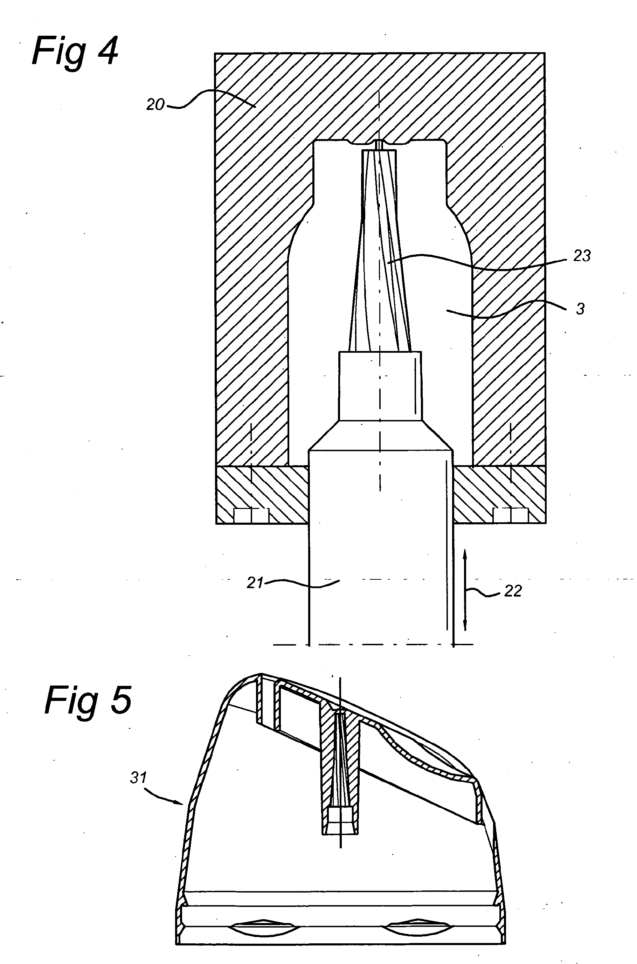

According to the present invention, preferably at least two grooves 8 are provided opposite one another. Fig. 3 shows that this number can be greater. The design and position of the grooves is such that they can be produced in a very simple manner, together with the duct 6, when the dispensing nozzle is formed. This is more clearly illustrated with reference to Fig. 4, in which an injection mould part, which is denoted by reference numeral 20, is provided with a recess for receiving plastic therein in a manner which is not shown in any more detail. The boundary surface of the recess corresponds to the outer surface of the outflow nozzle. In order to form the duct and the groove, a core 21 is placed in the mould during injection-moulding so that this space cannot be filled with plastic, resulting in the duct and grooves. This core 21 has ribs 23 which match the grooves which are formed later. According to the invention, this core 21 can only be displaced in the direction of the arrow 22. That is to say that the grooves, in combination with the taper of the duct, are designed in such a manner that no rotary movement is necessary to remove the core 21 and an exact linear translational movement along arrow 22 is sufficient to remove the core 21 from the mould 20, without deformation near the grooves occurring.

As a result thereof, it is possible to make the above-described outflow nozzle of a relatively simple design, thus making a reduction in the initial costs and an increase in the manufacturing speed possible.

In the present invention, it is no longer necessary to introduce separate loose parts in the duct 6 at a later stage. Due to the tapering shape of the duct 6, the fluid from the spray can is compressed in the direction of the dispensing opening.

Surprisingly, it has been found that by using the above-described embodiments, it is possible to achieve atomization with a substantially uniform droplet size. When the number of grooves is increased, the atomization improves, but the design becomes more complicated.

By additionally forming the dispensing nozzle or the dispensing opening as an integral part of the outflow nozzle, a further separate part can be omitted, resulting in a further saving due to the number of assembling operations being reduced. In the present invention, preferably no part, such as a pin or the like, is used in the duct and the duct is completely hollow.

Fig. 5 shows how the outflow nozzle is formed as an integral part of a cap 31 for a spray can. The illustrated part is produced solely by injection-moulding.

Upon reading the above, those skilled in the art will immediately be able to think of variants. These are within the scope of the attached claims.

## Claims

1. Outflow nozzle (3) for a spray can (1) comprising a receiving end (9) for receiving a dispensing sleeve (2) of a spray can, and a dispensing end having a dispensing opening (4) for dispensing a spray, in which a duct (6) with turbulence-imparting means is provided between the receiving end and the dispensing opening, said turbulence-imparting means comprising a groove (8) extending in the wall of said duct, which groove extends in the shape of a helix **characterised in that** said duct tapers from the receiving end in the direction of the dispensing opening.

2. Outflow nozzle according to Claim 1, comprising two grooves provided along the periphery of the duct with a regular distance between them so that they are evenly distributed about said duct.

3. Outflow nozzle according to one of the preceding claims, wherein the length of the groove and the pitch thereof are chosen such that the longitudinal centre axis (11) of the groove runs in an arc of at least 90°.

4. Outflow nozzle according to one of the preceding claims, wherein the depth of said groove increases in the direction towards said dispensing opening.

5. Outflow nozzle according to one of the preceding claims, wherein the width of said groove decreases in the direction of the dispensing opening.

6. Outflow nozzle according to one of the preceding claims, wherein the helical shape of the groove (8), the depth of the groove and the shape of the duct are such that a foaming element (21) which can be displaced along the longitudinal axis of said duct without rotation, and which fills said duct and said groove completely, can be moved out of said duct.

7. Outflow nozzle according to one of the preceding claims, wherein said dispensing opening (4) comprises the dispensing passage (5).

8. Spray can comprising a container provided with a dispensing sleeve (2) on which an outflow nozzle according to one of the preceding claims is arranged, which outflow nozzle comprises a receiving end (9) for receiving a dispensing sleeve (2) of a spray can, and a dispensing end having a dispensing opening (4) for dispensing a spray, in which a duct (6) with turbulence-imparting means is provided between the receiving end and the dispensing opening, said turbulence-imparting means comprising a groove (8) extending in the wall of said duct, which groove extends in the shape of a helix, said duct tapering from the receiving end in the direction of the dispensing opening.

9. Spray can according to Claim 8, comprising a cap (31) provided thereon of which the outflow nozzle (3) forms an integral part.

10. Spray can according to claim 8 or 9 wherein the dispensing opening (4) extends in the vertical direction in accordance with the vertical position of the can.

11. Method for producing an outflow nozzle according to one of the preceding claims by means of injection-moulding, comprising providing a mould (20) having a mould cavity and a core (21) which is displaceable with respect thereto, the core being provided with an external rib (23) for forming a groove in the object to be injection-moulded, the shape of the core and the position and design of the rib are such that, once plastic is injected in said mould cavity while said core is present therein, said core can be removed from the mould cavity and the injection-moulded object without deformation thereof, solely by displacing it along its longitudinal axis without rotation.

## Patentansprüche

1. Ausflußdüse (3) für eine Sprühdose (1), die aufweist: ein Aufnahmeende (9) zum Aufnehmen einer Abgabehülse (2) einer Sprühdose und ein Abgabeende mit einer Abgabeöffnung (4) zum Abgeben eines Sprays, wobei ein Kanal (6) mit einer Verwirbelungen verleihenden Einrichtung zwischen dem Aufnahmeende und dem Abgabeende angeordnet ist, wobei die Verwirbelungen verleihende Einrichtung eine Rille (8) aufweist, die in der Wand des Kanals verläuft, wobei die Rille in der Form einer Helix verläuft, **dadurch gekennzeichnet, daß** der Kanal von dem Aufnahmeende in die Richtung der Abgabeöffnung konisch zuläuft.

2. Ausflußdüse nach Anspruch 1, die zwei Rillen aufweist, die entlang des Umfangs des Kanals mit einem regelmäßigen Abstand zwischen ihnen angeordnet sind, so daß sie gleichmäßig um den Kanal verteilt sind.

3. Ausflußdüse nach einem der vorhergehenden Ansprüche, wobei die Länge der Rille und ihre Ganghöhe derart gewählt sind, daß die Längsmittelachse (11) der Rille in einem Bogen von wenigstens 90° verläuft.

4. Ausflußdüse nach einem der vorhergehenden Ansprüche, wobei die Tiefe der Rille in die Richtung der Abgabeöffnung zunimmt.

5. Ausflußdüse nach einem der vorhergehenden Ansprüche, wobei die Breite der Rille in der Richtung der Abgabeöffnung abnimmt.

6. Ausflußdüse nach einem der vorhergehenden Ansprüche, wobei die Helixform der Rille (8), die Tiefe der Rille und die Form des Kanals derart sind, daß ein Formelement (21), das ohne Drehung entlang der Längsachse des Kanals verschoben werden kann und das den Kanal und die Rille vollständig füllt, aus dem Kanal heraus bewegt werden kann.

7. Ausflußdüse nach einem der vorhergehenden Ansprüche, wobei die Abgabeöffnung (4) den Abgabedurchgang (5) aufweist.

8. Sprühdüse, die einen Behälter aufweist, der mit einer Abgabehülse (2) versehen ist, auf der eine Ausflußdüse nach einem der vorhergehenden Ansprüche angeordnet ist, wobei die Ausflußdüse ein Aufnahmeende (9) zum Aufnehmen einer Abgabehülse (2) einer Sprühdose und ein Abgabeende mit einer Abgabeöffnung (4) zum Abgeben eines Sprays aufweist, wobei ein Kanal (6) mit einer Verwirbelungen verleihenden Einrichtung zwischen dem Aufnahmeende und dem Abgabeende angeordnet ist, wobei die Verwirbelungen verleihende Einrichtung eine Rille (8) aufweist, die in der Wand des Kanals verläuft, wobei die Rille in der Form einer Helix verläuft, wobei der Kanal von dem Aufnahmeende in die Richtung der Abgabeöffnung konisch zuläuft.

9. Sprühdüse nach Anspruch 8, die eine darauf angeordnete Kappe (31) aufweist, von der die Ausflußdüse (3) einen integralen Teil bildet.

10. Sprühdose nach Anspruch 8 oder 9, wobei die Abgabeöffnung (4) entsprechend der vertikalen Position der Dose in der Vertikalrichtung verläuft.

11. Verfahren zur Herstellung einer Ausflußdüse nach einem der vorhergehenden Ansprüche mittels Spritzgießen, das aufweist: Bereitstellen einer Form (20) mit einem Formhohlraum und einem Kern (21), der in Bezug auf diese verschiebbar ist, wobei der Kern mit einer Außenrippe (23) zum Ausbilden einer Rille in dem Gegenstand, der spritzgegossen werden soll, versehen ist, wobei die Form des Kerns und die Position und Konstruktion der Rippe derart sind, daß, wenn einmal Kunststoff in den Formhohlraum eingespritzt ist, während der Kern darin vorhanden ist, der Kern aus dem Formhohlraum und dem spritzgegossenen Gegenstand entfernt werden kann, ohne verformt zu werden, indem er lediglich ohne Drehung entlang seiner Längsachse versetzt wird.

## Revendications

1. Buse de sortie (3) pour une bombe à aérosol (1), comprenant une extrémité de réception (9) pour recevoir un manchon de distribution (2) d'une bombe à aérosol, et une extrémité de distribution ayant une ouverture de distribution (4) pour distribuer un aérosol, une conduite (6) pourvue de moyens de production de turbulences étant prévue entre l'extrémité de réception et l'ouverture de distribution, lesdits moyens de production de turbulences comprenant une gorge (8) s'étendant dans la paroi de ladite conduite, laquelle gorge s'étend sous la forme d'une hélice, **caractérisée en ce que** ladite conduite se rétrécie à partir de l'extrémité de réception en direction de l'ouverture de distribution.

2. Buse de sortie selon la revendication 1, comprenant deux gorges prévues le long de la périphérie de la conduite avec une distance régulière entre elles, de façon à être uniformément réparties autour de ladite conduite.

3. Buse de sortie selon l'une des revendications précédentes, dans laquelle la longueur de la gorge et son pas sont choisis de telle sorte que l'axe central longitudinal (11) de la gorge s'étende selon un arc de cercle d'au moins 90°.

4. Buse de sortie selon l'une des revendications précédentes, dans laquelle la profondeur de ladite gorge augmente dans la direction allant vers ladite ouverture de distribution.

5. Buse de sortie selon l'une des revendications précédentes, dans laquelle la largeur de ladite gorge diminue dans la direction de l'ouverture de distribution.

6. Buse de sortie selon l'une des revendications précédentes, dans laquelle la forme en hélice de la gorge (8), la profondeur de la gorge et la forme de la conduite sont telles qu'un élément de formation (21), qui peut être déplacé le long de l'axe longitudinal de ladite conduite, sans tourner, et qui remplit complètement ladite conduite et ladite gorge, puisse être sorti de ladite conduite.

7. Buse de sortie selon l'une des revendications précédentes, dans laquelle ladite ouverture de distribution (4) comprend le passage de distribution (5).

8. Bombe à aérosol comprenant un conteneur pourvu d'un manchon de distribution (2) sur lequel est disposée une buse de sortie selon l'une des revendications précédentes, laquelle buse de sortie comprend une extrémité de réception (9) pour recevoir un manchon de distribution (2) d'une bombe à aérosol, et une extrémité de distribution ayant une ouverture de distribution (4) pour distribuer un aérosol, une conduite (6) pourvue de moyens de production de turbulences étant prévue entre l'extrémité de réception et l'ouverture de distribution, lesdits moyens de production de turbulences comprenant une gorge (8) s'étendant dans la paroi de ladite conduite, laquelle gorge s'étend sous la forme d'une hélice, ladite conduite se rétrécissant à partir de l'extrémité de réception en direction de l'ouverture de distribution.

9. Bombe à aérosol selon la revendication 8, sur laquelle est prévu un capot (31), dont la buse de sortie (3) fait partie intégrante.

10. Bombe à aérosol selon la revendication 8 ou 9, dans laquelle l'ouverture de distribution (4) s'étend dans la direction verticale, lorsque la bombe est en position verticale.

11. Procédé de production d'une buse de sortie selon l'une des revendications précédentes au moyen d'un moulage par injection, le procédé comprenant la fourniture d'un moule (20) ayant une cavité de moule et un noyau (21) qui peut être déplacé par rapport à cette dernière, le noyau étant pourvu d'une nervure extérieure (23) servant à former une gorge dans l'objet à mouler par injection, la forme du noyau et la position et la conception de la nervure étant telles qu'une fois que le plastique a été injecté dans ladite cavité alors que ledit noyau y était présent, ledit noyau peut être retiré de la cavité de moule et de l'objet moulé par injection sans déformer ce dernier, uniquement par le fait de déplacer le noyau le long de son axe sans le faire tourner.
